Europäisches Patentamt

European Patent Office

Office européen des brevets

(19)

(11) Veröffentlichungsnummer : **0 121 213 B1**

(12) **EUROPÄISCHE PATENTSCHRIFT**

(45) Veröffentlichungstag der Patentschrift :
07.06.89

(51) Int. Cl.⁴ : **B 24 B  5/26**

(21) Anmeldenummer : **84103333.5**

(22) Anmeldetag : **27.03.84**

(54) Vorrichtung mit einem Bearbeitungswerkzeug zur Bearbeitung von Rollen.

(30) Priorität : **30.03.83 DE 3311720**

(43) Veröffentlichungstag der Anmeldung :
**10.10.84 Patentblatt 84/41**

(45) Bekanntmachung des Hinweises auf die Patenterteilung : **07.06.89 Patentblatt 89/23**

(84) Benannte Vertragsstaaten :
**DE FR GB IT**

(56) Entgegenhaltungen :
**FR–A– 2 230 456**
**FR–A– 2 230 461**
**US–A– 2 579 520**
**US–A– 3 023 552**
**US–A– 3 169 351**
**US–A– 3 345 783**

(73) Patentinhaber : **Maschinenbau Grieshaber GmbH & Co.**
**Hauptstrasse 1**
**D-7620 Wolfach (DE)**

(72) Erfinder : **Winkelmann, Wolfgang**
**Am Kastaniendobel 11**
**D-7620 Wolfach (DE)**

(74) Vertreter : **Strasse, Joachim, Dipl.-Ing. et al**
**Strasse und Stoffregen European Patent Attorneys**
**Zweibrückenstrasse 17**
**D-8000 München 2 (DE)**

Jouve, 18, rue St-Denis, 75001 Paris, France

## Beschreibung

Die Erfindung bezieht sich auf eine Vorrichtung mit einem Bearbeitungswerkzeug zur Bearbeitung von Rollen mit starker Krümmung, insbesondere von Tonnenrollen, die sich während der Bearbeitung drehen und die insbesondere kleine Abmessungen aufweisen.

Zylindrische oder schwach ballige Rollen werden im Durchlaufverfahren bearbeitet. Bei diesem Verfahren werden die Rollen zwischen zwei sich im gleichen Sinne drehenden Walzen, deren Achsen gegeneinander geneigt sind, unter axial schwingenden Honsteinen hindurchgeführt. Für Rollen mit starker Krümmung, z. B. Tonnenrollen, ist diese Verfahren nicht mehr anwendbar. Derartige Rollen werden im Einstechverfahren bearbeitet, bei dem die Rollen einzeln zwischen Formwalzen eingelegt werden und der Honstein eine dem Krümmungsradius der Rollenmantellinie entsprechende hin- und hergehende Bewegung ausführt. Bei stark balligen Rollen mit kleinen Abmessungen kann dieses Verfahren ebenfalls angewendet werden. Maschinen mit mehreren nebeneinander angeordneten Bearbeitungsstationen sind jedoch schwierig zu beschicken und umständlich umzurüsten. Die Einstellung der Schwingradien aller Honsteine erfordert aufwendige mechanische Mittel ; der Austausch der Führungswalzen mit den, den Rollen entsprechenden, Tragringen sowie die Anpassung der Zu- und Abführeinrichtungen ist aufwendig.

Die FR-A-2 230 461 zurückgehend auf die Deutsche Prioritätsanmeldung DE-OS 23 26 613 derselben Anmelderin beschreibt eine Vorrichtung, bei der sich ein Werkstück zwischen einer festen drehbaren Antriebsrolle und einer abschwenkbaren Antriebsrolle befindet und das von einem als Widerlager dienenden Schuh gegen die antreibenden Rollen gepreßt wird.

Auf der dem Schuh gegenüberliegenden Seite des Werkstücks befinden sich die mechanisch bewegten Teile einer zurückschwenkbaren Zustellvorrichtung, die sich über einen Schleifstand an das Werkstück anlegt. Nach der Oberflächenbearbeitung eines Werkstücks wird die abschwenkbare Antriebsrolle in Richtung einer Spaltvergrößerung zwischen den Antriebsrollen verschwenkt. Gleichzeitig wird das Werkstück durch Zurückschwenken des Bearbeitungswerkzeugs freigegeben und anschließend wird ein Auswerfer, der oberhalb des als Widerlager dienenden Schuhs verschiebbar angeordnet ist, in Richtung des Werkstücks beschleunigt, um dieses aus seiner Arbeitsstellung weg auszustoßen. Gleichzeitig wird ein neues Werkstück mittels einer geeigneten Ausformung des Auswerfers in Position gebracht. Die Ab- und Zuführung der fertiggestellten bzw. der zu bearbeitenden Werkstücke erfolgt also in der vertikalen Ebene des Bearbeitungswerkzeuges.

Diese bekannte Vorrichtung wird vorzugsweise zur Bearbeitung der Laufbahn kleiner Kugellagerringe angewandt. Will man nun mit derselben Vorrichtung kleinste Tonnenrollen bearbeiten, kommt man zu keinem befriedigenden Ergebnis. Zunächst kleben die kleinsten Tonnenrollen, die einen ungefähren Durchmesser von 4 mm und eine axiale Länge von ebenfalls 4 mm aufweisen und beispielsweise ca. 1,6 g wiegen, an den Zuführschiebern und den Antriebsscheiben, wodurch ein störungsfreier Betrieb der bekannten Vorrichtung nicht möglich ist. Da die kleinen stark gekrümmten Werkstücke aus einer Seite durch den starren Schuh geführt werden, sind infolge ihrer sehr starken Krümmung unzulässige Markierungen auf der Werkstückoberfläche festzustellen. Zur Lagestabilisierung der Rolle ist ein relativ großer, den Anpreßdruck des Honsteins übersteigender Gegendruck der Stützscheibe erforderlich, der von einem Schuh nicht aufgebracht werden kann, will man das zu bearbeitende Werstück nicht allzu stark beschädigen. Der Werkstückwechsel mittels des Ausstoßers wäre für die sehr kleinen Rollen schwierig, da der Ausstoßer die Rolle oberhalb der Mitte trifft und infolge des geringen Rollendurchmessers sich die Gefahr ergibt, daß der Ausstoßer bei einer nicht spielfreien Führung auf die Rolle aufgleitet, was wiederum ein Ausschlagen der Führung des Ausstoßers mit sich brächte. Die obere Antriebsscheibe müßte während des Ausstoßvorganges nach oben ausgeschwenkt werden, um das zu bearbeitende Werkstück ausstoßen zu können. Das neue in Arbeitsstellung zugeführte Werkstück darf aber nicht zwischen den Antriebsscheiben durchfallen. Dies erfordert für die wesentlich kleineren Tonnenrollen eine aufwendige Steuerung der Schwenkbewegung der oberen Antriebsscheibe. Schließlich ist es aus Kostengründen zu fordern, daß der Zeitaufwand zur Bearbeitung der jeweiligen Tonnenrollen minimiert wird. Der sich bei der Verwendung der bekannten Vorrichtung ergebende Zeitaufwand wäre wegen der vielen erforderlichen Bewegungsabläufe für den Wechsel der Werkstücke zu hoch.

Hieraus ergibt sich die Aufgabe, eine Vorrichtung mit einem Bearbeitungswerkzeug zur Bearbeitung von Rollen mit starker Krümmung, insbesondere von Tonnenrollen, zu entwickeln, die unter Vermeidung der vorstehend beschriebenen Schwierigkeiten leichter auf unterschiedliche Rollen mit starker Krümmung eingestellt werden kann und bei der die Rollen einfach und schnell in die Bearbeitungsposition transportiert und nach Beendigung der Bearbeitung aus dieser Position entfernt werden können.

Die Aufgabe wird erfindungsgemäß durch die Merkmale des kennzeichnenden Teils des Anspruchs 1 gelöst.

Mit dieser Anordnung läßt sich ein feste und sichere Einspannung der Rollen erreichen. Die Anordnung ist in axialer Richtung von zwei Seiten je für die Beschickung von zu bearbeitenden Rollen und für den Abtransport bereits bearbeiteter Rollen zugänglich. In kurzer Zeit kann die

2

Vorrichtung aus der Arbeitsstellung, in der eine Rolle zwischen den Führungsscheiben und der Stützscheibe eingespannt und gegen das Bearbeitungswerkzeug gedrückt ist, durch eine entsprechende Verschiebebewegung in die für den Abtransport der bearbeiteten Rolle und die Bestückung mit einer neuen Rolle vorgesehene Abgabe- und Aufnahmeposition gebracht werden. Die Einspannung der in der Aufnahmeposition liegenden Rolle durch die in umgekehrter Richtung verlaufende Verschiebebewegung nimmt ebenfalls nur wenig Zeit in Anspruch. Nicht bei jeder Änderung der Tonnenrollenabmessungen ist eine Umstellung erforderlich, sondern nur bei solchen, bei denen die Größenänderung so ist, daß ohne Umstellung die Rollen auf einer Kante der Teilscheiben abrollen würden, was unter Umständen zu Markierungen auf der Rollenoberfläche führen könnte.

Eine Umstellung läßt sich aber auch, da die Führungsscheiben fliegend gelagert sind, sehr schnell durchführen und ist darüber hinaus erheblich einfacher zu bewerkstelligen als bei bekannten Mehrstationenwalzen.

Ein weiterer Vorteil ist darin zu sehen, daß mehrere gleichartige Vorrichtungen nebeneinander angeordnet werden können, wobei die Vorrichtungen jeweils verschiedene Bearbeitungsarten, z. B. Grob- und Feinbearbeitung der Rollen durchführen. Die Bearbeitungsgeschwindigkeiten lassen sich aufeinander abstimmen, so daß eine selbsttätige Bearbeitung im Durchlaufverfahren stattfinden kann.

Vorzugsweise ist die Stützscheibe diametral zum Bearbeitungswerkzeug an die Mitte der jeweiligen Rolle andrückbar. Hierdurch läßt sich mit dem geringsten Kraftaufwand eine feste Einspannung der Rolle erreichen.

Bei einer bevorzugten Ausführungsform ist das Bearbeitungswerkzeug ein Honstein, der quer zur Drehrichtung der Rolle hin- und herbewegbar ist. Mit dieser Anordnung kann eine Feinstbearbeitung der Rollen durchgeführt werden.

Zweckmäßigerweise werden die je zwei Teilscheiben enthaltenden Führungsscheiben synchron und gleichsinnig angetrieben. Die Führungsscheiben übertragen somit die zur Drehung erforderlichen Kräfte auf die Rolle, während die Stützscheibe von der eingespannten Rolle mitgenommen wird. Die Stützscheibe kann deshalb eigens für die Ausübung von Druckkräften auf die jeweilige Rolle ausgebildet sein und eine geringe Masse aufweisen. Da die eingespannte Rolle an zwei Stellen längs der runden Außenseite angetrieben wird, reichen die übertragenen Antriebskräfte aus, um die Rolle auch bei größeren Anspreßkräften zwischen Rolle und Bearbeitungswerkzeug in Drehung zu halten.

Bei einer bevorzugten Ausführungsform ist vorgesehen, daß die zwischen den Mitten der beiden Führungsscheiben verlaufende Verbindungslinie jeweils mit der von der Mitte der einen Führungsscheibe zur Mitte der Rolle verlaufenden Verbindungslinie und mit der von der Mitte der anderen Führungsscheibe zur Mitte der Rolle verlaufenden Verbindungslinie einen spitzen Winkel einschließt. Die Führungsscheiben sind bei dieser Anordnung auf der einen Seite und die Stützscheibe ist auf der anderen Seite der in Bearbeitungsposition gehaltenen Rolle angeordnet. Damit läßt sich eine feste und gleichmäßige Einspannung erzielen, die trotzdem einen großen Raum für das Bearbeitungswerkzeug freiläßt.

Bei einer zweckmäßigen Ausführungsform ist die eine Führungsscheibe senkrecht oder in etwa senkrecht und die Stützscheibe parallel zur Richtung des vom Bearbeitungswerkzeug auf die Mitte der Rolle ausübbaren Drucks verschiebbar angeordnet. Zur Freigabe der bearbeiteten Rollen werden die Führungsscheibe und die Stützscheibe aus der Einspannstellung in eine Ruhestellung verschoben. Damit ist die Rolle von der Seite her für den Abtransport zugänglich. Nach dem Abtransport der bearbeiteten Rolle kann eine andere Rolle eingeführt werden, die anschließend durch eine entsprechende Verschiebung der Führungsscheibe und der Stützscheibe in die Bearbeitungsposition gebracht und in dieser eingespannt wird.

Bei einer anderen bevorzugten Ausführungsform ist vorgesehen, daß zuerst die eine an der Rolle anliegende Führungsscheibe senkrecht oder in etwa senkrecht zur Verschieberichtung des Bearbeitungswerkzeugs von der Rolle zurückziehbar ist und daß danach die Stützscheibe entgegen der Richtung des Drucks des Bearbeitungswerkzeugs zurückziehbar ist. Die eine Führungsscheibe und die Stützscheibe bewegen sich bei dieser Anordnung in einem ersten Arbeitsschritt in gleicher Richtung. Dabei wird die Rolle auch unter dem Einfluß der Drehbewegung dieser Führungsrolle vom Bearbeitungswerkzeug abgehoben und in Richtung einer Entladeposition bewegt. Die Rolle nimmt also eine definierte Lage ein. Danach bewegt sich die Führungsscheibe in eine Endlage und gibt die bearbeitete Rolle frei, die aus ihrer definierten Lage mit entsprechend ausgerichteten Transportmitteln entfernt werden kann.

Eine weitere zweckmäßige Ausführungsform besteht darin, daß auf der der einlaufrinne gegenüberliegenden Seite der Stützscheibe bzw. der Führungsscheiben eine Ablaufrinne mit ihrem Ende in Höhe der Werkstückaufnahme- und Werkstückabgabeposition angeordnet ist. Bei dieser Ausführungsform reicht ein bewegbarer Teil, ein Kolben, aus, um die bearbeitete Rolle aus ihrer Freigabelage zu entfernen und zugleich eine zu bearbeitende Rolle in diese Lage zu bewegen. Der Rollentransport läßt sich deshalb auf einfache Weise in sehr kurzer Zeit durchführen, wodurch sich auch die Durchlaufzeit der Rollen verkürzt.

Vorzugsweise ist auf der der Zuführrinne gegenüberliegenden Seite der Stützscheibe bzw. der Führungsscheiben eine Ablaufrinne mit ihrem Ende in Höhe der Werkstückaufnahme- und Werkstückabgabeposition angeordnet.

Weitere Einzelheiten, Merkmale und Vorteile der Erfindung werden im folgenden anhand eines in einer Zeichnung dargestellten Ausführungsbeispiels näher erläutert.

Es zeigen :

Fig. 1 eine Seitenansicht einer Vorrichtung mit einem Bearbeitungswerkzeug zur Bearbeitung von Tonnenrollen mit kleinen Abmessungen,

Fig. 2 einen Schnitt längs der Linien I-I der in Fig. 1 dargestellten Vorrichtung,

Fig. 3 einen Schnitt längs der Linien II-II der in Fig. 1 dargestellten Vorrichtung.

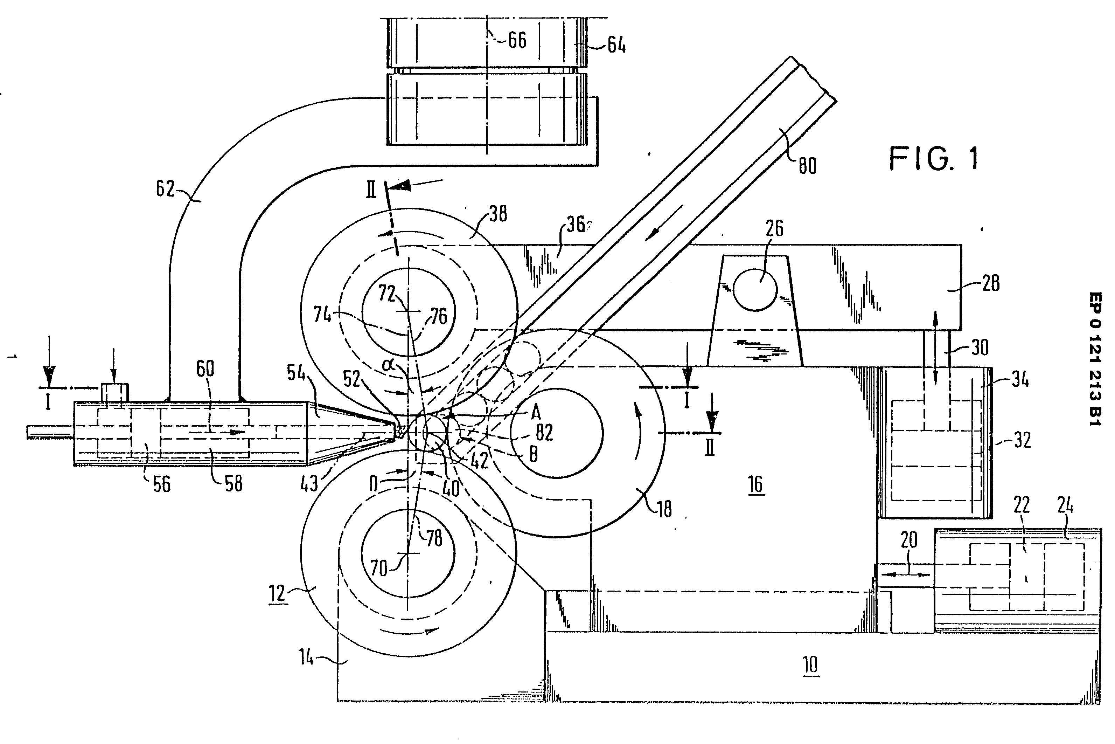

Eine Vorrichtung zur Bearbeitung von Tonnenrollen mit kleinen Abmessungen, z. B. von weniger als 5 mm Durchmesser und 5 mm Länge, enthält ein ortsfestes Maschinengestell 10, auf dem eine untere Führungsscheibe 12 drehbar gelagert ist. Die Führungsscheibe 12 wird von einem Lagerbock 14 getragen, der mit dem Maschinengestell 10 verbunden ist. Auf dem Maschinengestell 10 ist ferner ein Schlitten 16 verschiebbar angeordnet, an dessen einem Ende eine Stützscheibe 18 drehbar gelagert ist. Die Verschieberichtung des Schlittens 16 ist in Fig. 1 durch einen Pfeil 20 dargestellt. Die Verschiebung des Schlittens 16 erfolgt senkrecht zur Drehachse der Stützscheibe 18. Die Kraftübertragung auf den Schlitten 16 wird mit einem Kolben 22 durchgeführt, der über eine nicht näher bezeichnete Welle mit dem Schlitten 16 verbunden ist. Der Kolben 22 ist in einem druckmittelbeaufschlagten Zylinder 24 geführt, der am Maschinengestell 10 angeordnet ist.

Auf dem Schlitten 16 ist ein nicht näher bezeichneter Lagerbock befestigt, an dem über eine Achse 26 ein Hebel 28 schwenkbar angeordnet ist. Der Hebel 28 ist über eine Welle 30 mit einem Kolben 32 verbunden, der in einem Zylinder 34 geführt ist. Der Zylinder 34 ist mit dem Schlitten 16 verbunden. Die Welle 30 greift am rechten Arm des Hebels 28 an. Durch eine Beaufschlagung des Kolbens 32 mit einem Druckmittel wird der Hebel 28 geschwenkt. Am Ende des linken Arms 36 des Hebels 28 ist eine zweite Führungsscheibe 38 drehbar gelagert. Die Führungsscheiben 12 und 38 sind um waagerechte Achsen drehbar angeordnet. Zum Antrieb der beiden Führungsscheiben 12 und 38 kann ein nicht dargestellter Motor verwendet werden, der über einen Riemen mit entsprechenden Antriebsrollen der Führungsscheiben 12, 38 verbunden ist. Zum Antrieb der Führungsscheiben 12, 38 kann auch ein Zahnriemen verwendet werden. Wesentlich ist, daß die Führungsscheiben 12, 38 gleichsinnig und synchron angetrieben werden.

Je nach den Stellungen der Kolben 22, 32 in den Zylindern 24, 34 nehmen die Stützscheibe 18 und die Führungsscheibe 38 gegenüber der Führungsscheibe 12 verschiedene Stellungen ein. In Fig. 1 ist eine Endlage der Führungsscheibe 38 und der Stützscheibe 18 dargestellt, die der Bearbeitungsposition einer Tonnenrolle 40 entspricht, die zwischen den Führungsscheiben 12, 38 und der Stützscheibe 18 eingespannt ist. In der Bearbeitungsposition der Tonnenrolle 40 befindet sich diese zwischen den Führungsscheiben 12, 38, die symmetrisch zu einer durch die Mitte 42 der Tonnenrolle 40 verlaufenden Querachse 43 angeordnet sind. Jede Führungsscheibe 12, 38 enthält zwei im Abstand voneinander angeordnete Teilscheiben 46, deren Mantelflächen 48 an die Tonnenrolle 40 angepaßt sind. Die Mantelflächen 48 berühren die in der Bearbeitungsposition angeordnete Tonnenrolle 40 außermittig und symmetrisch zur Mitte der Tonnenrolle 40. Vorzugsweise ist der Abstand zwischen den Teilscheiben 46 so groß, daß die Mantelflächen 48 nahe an den Stirnseiten 50 die runde Mantelfläche der Tonnenrolle 40 berühren. Die Stützscheibe 18 ragt in die Lücke zwischen den Teilscheiben 46 hinein.

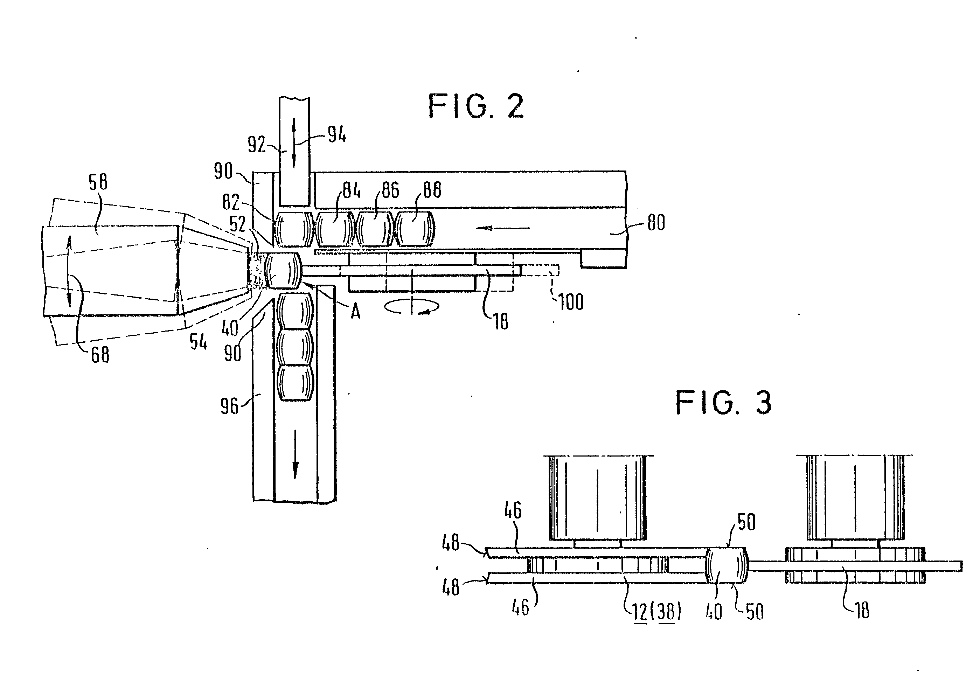

In der Bearbeitungsposition der Tonnenrolle 40 befindet sich die an die Tonnenrolle 40 angedrückte Stützscheibe 18 in diametraler Lage gegenüber einem Bearbeitungswerkzeug, bei dem es sich um einen Honstein 52 handelt, der in einem Steinhalter 54 axial beweglich gelagert ist. Der Honstein 52 ist mit einem Kolben 56 verbunden, der in einer Führung 58 gelagert ist. Über den druckmittelbeaufschlagten Kolben 56 wird der Honstein 52 gegen die Tonnenrolle 40 gedrückt. Die Richtung der vom Honstein 52 auf die Mitte der Tonnenrolle 40 ausgeübten Kraft ist in Fig. 1 mit einem Pfeil 60 bezeichnet. Dieser Pfeil 60 gibt zugleich die Verschieberichtung des Honsteins gegenüber der Tonnenrolle 40 an. Wegen der kleinen Abmessung der Tonnenrolle 40 werden kleine Honsteine 52 eingesetzt, für die zweckmäßigerweise eine Steinführung verwendet wird, wie sie in der DE-AS 23 26 691 beschrieben und insbesondere in der Fig. 3 dieser Schrift dargestellt ist.

Der Steinhalter 54 ist mit der Führung 58 verbunden, die über einen Träger 62 mit einem Schwingantrieb 64 verbunden ist, der nicht im einzelnen dargestellt ist. Der Träger 62, die Führung 58, der Steinhalter 54 und der Honstein 52 schwingen um eine Achse 66, in zwei in Fig. 2 durch einen Pfeil 68 bezeichneten Richtungen hin und her. Die Achse 66 ist entsprechend dem Krümmungsradius der zu bearbeitenden Tonnenrolle einstellbar.

Zwischen den Mitten 70, 72 der beiden Führungsscheiben 12, 38 läßt sich eine Verbindungslinie 74 ziehen. Die Führungsscheiben 12, 38 sind nun so zueinander in der Bearbeitungsposition der jeweiligen Tonnenrolle 40 angeordnet, daß diese Verbindungslinie 74 mit der von der Mitte 72 zur Mitte 42 der Tonnenrolle 40 verlaufenden Verbindungslinie 76 und mit der von der Mitte 70 zur Mitte 42 verlaufenden Verbindungslinie 78 spitze Winkel α, β einschließt. Zweckmäßigerweise sind die Winkel α und β gleich groß.

Eine Tonnenrolle 40 kann zwischen den Führungsscheiben 12, 38 und der Stützscheibe 18 zwei Endlagen einnehmen. Die eine Endlage ist die Bearbeitungsposition, die in Fig. 1 an der durchgezogenen Linie der Tonnenrolle 40 erkennbar ist. Die Bearbeitungsposition ist in Fig. 1 mit « A » bezeichnet. Die zweite Endlage, in der sich die jeweilige Tonnenrolle in der Werkstückaufnahme- und Werkstückabgabeposition, im folgenden kurz Transportposition genannt, befindet, ist ebenfalls in Fig. 1 dargestellt. In der mit « B »

bezeichneten Transportposition liegt die Transportrolle 40 vor der Verschiebung in die Bearbeitungsposition A oder nach der Verschiebung aus der Bearbeitungsposition.

Neben der Führungsscheibe 38 und der Stützscheibe 18 ist eine Einlaufrinne 80 angeordnet, die parallel zu den Ebenen der Stützscheibe 18 und den Führungsscheiben 12, 38 verläuft. Die Einlaufrinne 80 hat eine nicht näher bezeichnete geneigte Führungsbahn, in der sich zu bearbeitende Tonnenrollen 82, 84, 86, 88 befinden, die mit ihren Achsen parallel zueinander ausgerichtet sind. Das untere, mit einem Anschlag 90 versehene Ende der Führungsbahn ist gegenüber den Führungsscheiben 12, 38 und der Stützscheibe 18 so angeordnet, daß sich die unterste Tonnenrolle 82 in Höhe der Transportposition B befindet. Auf der den Führungsscheiben 12, 38 und der Stützscheibe 18 abgewandten Seite der Führungsbahn ist oberhalb des Anschlags 90 eine nicht näher bezeichnete Öffnung vorgesehen, durch die ein Kolben 92 einschiebbar ist. Die Verschieberichtung des Kolbens 92 ist in Fig. 2 mit 94 bezeichnet.

Auf der der Einlaufrinne 80 abgewandten Seite der Führungsscheiben 12, 38 und der Stützscheibe 18 ist eine Ablaufrinne 96 angeordnet. Die Ablaufrinne 96 verläuft schräg, wobei sich ihr oberes Ende 98 in Höhe der Transportposition B befindet.

Die Verschiebebewegung des Schlittens 16 und die Schwenkbewegung des Hebels 28 sind aufeinander abgestimmt. Erst wenn sich der Schlitten 16 in seiner rückwärtigen Lage befindet, in der die Stützscheibe 18 am weitesten von der Führungsscheibe 12 entfernt ist, wird das Ende des Arms 36 des Hebels 28 nach oben bewegt.

Dieser Ablauf kann umgekehrt sein, wenn der Schlitten 16 gegen den Honstein 52 gefahren wird. Dann wird das Ende 36 nach unten abgesenkt; danach wird der Schlitten 16 gegen den Honstein 52 bewegt.

Ein Arbeitszyklus läuft wie folgt ab:

Wenn sich der Schlitten 16 und die Führungsscheibe 38 in ihrer rückwärtigen Endstellung befinden und die Führungsscheibe 38 nach oben geschwenkt ist, ist die Transportposition B zwischen den Führungsscheiben 12, 38 und der Stützscheibe 18 dann frei, wenn die zu bearbeitende Tonnenrolle 40 die erste einer Reihe von Rollen ist. Im anderen Falle liegt eine Tonnenrolle in der Transportposition B. Der Kolben 92 schiebt nun z. B. die Tonnenrolle 82 in die Transportposition B, bei der die Stützscheibe 18, die in Fig. 2 mit 100 gestrichelt gezeichnete Lage einnimmt. Die Tonnenrolle 82 berührt während ihrer axialen Verschiebung die in der Transportposition liegende Tonnenrolle an der Stirnseite 50 und stößt sie in die Ablaufrinne 96. Wenn die Tonnenrolle 82 in der Transportposition B angekommen ist, wird der Kolben 92 in seine rückwärtige Endlage zurückbewegt. Hierbei gibt er den untersten Platz in der Einlaufrinne 80 frei. Dieser Platz wird dann von der Tonnenrolle 84 eingenommen. Die übrigen Tonnenrollen 86, 88 rücken um eine Rollenstärke nach unten.

Die Stützscheibe 18 wird in Richtung des Honsteins 52 bewegt und verschiebt die jeweils zu bearbeitende Tonnenrolle aus der Transportposition B in die Bearbeitungsposition A. Die Führungsscheibe 38 wird abwärts gegen die Transportrolle 40 geschwenkt. Damit ist die Tonnenrolle 40 eingespannt. Nunmehr wird der Kolben 56 mit Druckmittel beaufschlagt, während zugleich der Schwingantrieb 64 anläuft. Damit wird der Honstein 52 gegen die Tonnenrolle 40 gedrückt und zugleich hin- und herbewegt, bis die gewünschte Form der Tonnenrolle 40 erreicht ist.

Anschließend wird der Schlitten 16 in die dem Honstein 52 entgegengesetzte Richtung verschoben. Danach wird die Führungsscheibe 38 geringfügig nach oben geschwenkt. Die Druckbeaufschlagung des Honsteins 52 wird beendet und die Schwingbewegung unterbrochen. Wenn sich die jeweilige Tonnenrolle in der Transportposition B befindet, wiederholt sich der oben beschriebene Vorgang.

## Patentansprüche

1. Vorrichtung mit einem Bearbeitungswerkzeug zur Bearbeitung von Rollen (40) mit starker Krümmung insbesondere von Tonnenrollen, die sich während der Bearbeitung drehen und die insbesondere kleine Abmessungen aufweisen, wobei die Rollen (40) jeweils in einer Bearbeitungsposition zwischen einer dem Bearbeitungswerkzeug diametral gegenüberliegenden Stütze (18) und zwei beiderseits der Angriffstelle des Bearbeitungswerkzeugs angeordneten, drehbaren Führungsscheiben (12, 38) einspannbar sind, dadurch gekennzeichnet, daß die dem Bearbeitungswerkzeug diametral gegenüberliegende Stütze als drehbare Stützscheibe (18) ausgeführt ist, daß die beiden Führungsscheiben (12, 38) zwei außermittig an der zu bearbeitenden Rolle (40) anliegende Teilscheiben (26) aufweisen, wobei die Stützscheibe (18) in den von den beiden Teilscheiben (26) gebildeten Zwischenraum hineinragt und wobei die Stützscheibe (18) etwa den gleichen Durchmesser aufweist wie die Führungsscheiben (12, 38), daß die Stützscheibe (18) und eine der Führungsscheiben (38) in eine von der Bearbeitungsposition (A) entfernte Werkstückaufnahme- und Werkstückabgabeposition (B) bewegbar ist und daß die Zu- und Abführung jeweils einer Rolle (40) parallel zu den Achsen der Führungsscheiben (12, 38) und der Stützscheibe (18) erfolgt.

2. Vorrichtung nach Anspruch 1, dadurch gekennzeichnet, daß die Führungsscheiben (12, 38) symmetrisch zu einer durch den Mittelpunkt (42) der zu bearbeitenden Rolle (40) verlaufenden Querachse (43) angeordnet sind, daß die Teilscheiben (46) mit an die Rolle (40) angepaßten Mantelflächen (48) an der Rolle (40) angedrückt sind und daß die Stützrolle (18) in die Lücke zwischen den parallelen Teilscheiben (46) hineinragt.

3. Vorrichtung nach Anspruch 1 oder 2, dadurch gekennzeichnet, daß die Stützscheibe (18) diametral zum Bearbeitungswerkzeug (52) an die Mitte der jeweiligen Rolle (40) andrückbar ist.

4. Vorrichtung nach Anspruch 1 oder einem der folgenden Ansprüche, dadurch gekennzeichnet, daß das Bearbeitungswerkzeug (52) ein Honstein ist, der quer zur Drehrichtung der Rolle hin- und herbewegbar ist.

5. Vorrichtung nach Anspruch 1 oder einem der folgenden Ansprüche, dadurch gekennzeichnet, daß die je zwei Teilscheiben (46) enthaltenden Führungsscheiben (12, 38) synchron und gleichsinnig angetrieben sind.

6. Vorrichtung nach Anspruch 1 oder einem der folgenden Ansprüche, dadurch gekennzeichnet, daß die zwischen den Mitten (70, 72) der beiden Führungsscheiben (12, 38) verlaufende Verbindungslinie (74) jeweils mit der von der Mitte (72) der einen Führungsscheibe (38) zur Mitte (42) der Rolle (40) verlaufenden Verbindungslinie (76) und mit der von der Mitte (70) der anderen Führungsscheibe (12) zur Mitte (42) der Rolle (40) verlaufenden Verbindungslinie (78) einen spitzen Winkel (α, β) einschließt.

7. Vorrichtung nach Anspruch 1 oder einem der folgenden Ansprüche, dadurch gekennzeichnet, daß die eine Führungsscheibe (38) senkrecht oder in etwa senkrecht und die Stützscheibe (18) parallel zur Richtung des vom Bearbeitungswerkzeug (52) ausgeübten Drucks verschiebbar angeordnet ist.

8. Vorrichtung nach Anspruch 1 oder einem der folgenden Ansprüche, dadurch gekennzeichnet, daß zuerst die eine an der Rolle (40) anliegende Führungsscheibe (38) senkrecht oder in etwa senkrecht zur Verschieberichtung des Bearbeitungswerkzeugs (52) von der Rolle (40) zurückziehbar ist und daß danach die Stützscheibe (18) entgegen der Richtung des Drucks des Bearbeitungswerkzeugs (52) zurückziehbar ist.

9. Vorrichtung nach Anspruch 1 oder einem der folgenden Ansprüche, dadurch gekennzeichnet, daß parallel zu den Ebenen der Führungsscheiben (12, 38) und der Stützscheibe (18) eine Einlaufrinne (80) für Rollen (82, 84, 86, 88) vorgesehen ist, daß die Einlaufrinne (80) einen Anschlag (90) aufweist, durch den die erste in der Einlaufrinne (80) liegende Rolle (82) in Höhe der Werkstückaufnahme- und Werkstückabgabeposition (B) angeordnet ist, die bei aus der Bearbeitungsposition (A) für die jeweilige Rolle (40) zurückgezogener Stütz- und Führungsscheibe (12, 38) gebildet ist, und daß die erste Rolle (82) mittels eines parallel zu den Achsen der Stützscheibe (18) und den Führungsscheiben (12, 38) verschiebbaren Kolbens (92) in die Werkstückaufnahme- und Werkstücksabgabeposition (B) bewegbar ist.

10. Vorrichtung nach Anspruch 9, dadurch gekennzeichnet, daß auch auf der der Einlaufrinne (80) gegenüberliegenden Seite der Stützscheibe (18) bzw. der Führungsscheiben (12, 38) eine Ablaufrinne (96) mit ihrem Ende (98) in Höhe der Werkstückaufnahme-Werkstückabgabeposition (B) angeordnet ist.

## Claims

1. An apparatus comprising a machining tool for machining rollers (40) with a strong surface curvature, in particular barrel-shaped rollers which rotate during machining and which, in particular, have small dimensions, the rollers (40) each being apt to be clamped in a machining position between a support (18) diametrically opposite the machining tool and two rotatable guiding disks (12, 38) which are disposed on either side of the attacking position of the machining tool, characterized in that the support which is mounted diametrically opposite the machining tool is a rotatable supporting disk (18), that the two guiding disks (12, 38) have two disk components (26) which each rest eccentrically on said roller (40) to be machined, whereby said supporting disk (18) projects into the interspace defined by the two disk components (26) and whereby the supporting disk (18) has approximately the same diameter as the guiding disks (12, 38), that the supporting disk (18) and one of the guiding disks (38) can be moved away from the machining position (A) into a position (B) for receiving and discharging the workpiece and that the feeding and the discharge of one roller (40) at a time is carried out in parallel to the axes of the guiding disks (12, 38) and the supporting disk (18).

2. Apparatus according to claim 1 characterized in that said guiding disks (12, 38) are disposed symmetrically to a horizontal axis (43) extending through the centre point (42) of said roller (40) to be machined, that said disk components (46) are pressed against said roller (40) by means of surface areas (48) adapted to said roller (40) and that said supporting disk (18) projects into the gap between the parallel disk components (46).

3. Apparatus according to claim 1 or 2, characterized in that the supporting disk (18) can be pressed against the centre of the corresponding roller (40) diametrically to the machining tool (52).

4. Apparatus according to claim 1 or any of the following claims characterized in that the machining tool (52) is a honing stone which can be moved to and fro transversely to the direction of rotation of the roller (40).

5. Apparatus according to claim 1 or any of the following claims characterized in that said guiding disks (12, 38), which each comprise two disk components (46), are driven synchronously and in the same direction.

6. Apparatus according to claim 1 or any of the following claims characterized in that a connecting line (74) extending between the centres (70, 72) of said two guiding disks (12, 38) forms an acute angle (α, β) both with the connecting line (76) extending from the centre (72) of the first guiding disk (38) to the centre (42) of said roller (40) and with the connecting line (78) extending from the centre (70) of the second guiding disk (12) to said centre (42) of the roller (40).

7. Apparatus according to claim 1 or any of the following claims characterized in that one of said guiding disks (38) is disposed vertically or approximately vertically and that said supporting disk (18) is slidably disposed parallel to the direction of the pressure exerted by the machining tool (52).

8. Apparatus according to claim 1 or any of the following claims characterized in that at first one of said guiding disks (38) resting against said roller (40) is withdrawable from said roller in a vertical or approximately vertical direction to the sliding direction of said machining tool (52) and that thereafter said supporting disk (18) can be withdrawn in the opposite direction of the pressure of said machining tool (52).

9. Apparatus according to claim 1 or any of the following claims characterized in that a side feed channel (80) for rollers (82, 83, 84, 86, 88) is provided parallel to the planes of said guiding disks (12, 38) and of said supporting disk (18), said side feed channel (80) comprising a stop (90) by which the first roller (82) lying in the side feed channel (80) is disposed at the levels of the workpiece receiving and discharging position (B) which is formed with said supporting (18) and guiding disks (12, 38) being withdrawn from machining position (A) for the respective roller (40) and that the first roller (82) can be moved into position (B) for receiving and discharging workpieces by means of a piston (92) slidable parallel to the axes of said supporting disk (18) and said guiding disks (12, 38).

10. Apparatus according to claim 9 characterized in that a discharge channel (96) with its end (98) at the level of said position (B) for receiving and discharging workpieces is also disposed on the side of said supporting disk (18) or said guiding disks (12, 38), respectively, which is opposite to said side feed channel (80).

**Revendications**

1. Dispositif avec un outil d'usinage pour usiner des rouleaux (40) avec une courbure forte, particulièrement des rouleaux tonneaux, qui sont entraînés en rotation pendant leur usinage et qui ont particulièrement de petites dimensions, les rouleaux (40) sont serrés dans une position d'usinage entre un support (18) qui se trouve diamétricalement opposé l'outil d'usinage (52) et deux disques tournants (12, 38) disposés aux deux côtés de la place d'attaque de l'outil d'usinage (52) caractérisé en ce que le support diamétralement opposé l'outil d'usinage est un disque de support tournant (18), que les deux disques de guidage (12, 38) sont munis de deux disques partiels (26) qui portent bien excentriquement au rouleau (40) à être usiné, que le disque de support (18) projette dans l'interstice formé par les deux disques partiels (26) et que le disque de support (18) a presque le même diamètre que les disques de guidage (12, 38), que le disque de support (18) et l'un des disques de guidage (38) peuvent être mus de la position (A) d'usinage dans une position (B) pour recevoir et délivrer des pièces en usinage et que l'amenage et l'évacuation d'un rouleau (40) à chaque fois est effectué parallèlement aux axes des disques de guidage (12, 38) et du disque de support (18).

2. Dispositif suivant la revendication 1 caractérisé en ce que les disques de guidage (12, 38) sont disposés symétriquement par rapport à un axe transversal (43) s'étendant à travers le centre (42) du rouleau (40) à.usiner, que les disques partiels (46) sont pressés au rouleau (40), leurs surfaces (48) étant adaptées au rouleau (40), et que le disque de support (18) projette dans un interstice entre les disques partiels (46) en parallèle.

3. Dispositif suivant les revendications 1 ou 2 caractérisé en ce que le disque de support (18) peut être pressé au centre du rouleau respectif (40) diamétralement à l'outil d'usinage (52).

4. Dispositif suivant la revendication 1 ou l'une quelconque des revendications suivantes caractérisé en ce que l'outil d'usinage (52) est une pierre abrasive à pierrer qui peut être mû transversalement dans les deux sens par rapport à la direction de rotation du rouleau.

5. Dispositif suivant la revendication 1 ou l'une quelconque des revendications suivantes caractérisé en ce que les disques de guidage (12, 38) comprennent chacun d'eux deux disques partiels (46) qui sont entraînés synchroniquement et en la même direction.

6. Dispositif suivant la revendication 1 ou l'une quelconque des revendications suivantes caractérisé en ce qu'une ligne de jonction (74) s'étendant entre les deux centres (70, 72) des deux disques de guidage (12, 38) forme un angle aigu ($\alpha$, $\beta$) avec la ligne de jonction (76) s'étendant du centre (72) de l'un des disques de guidage (38) au centre (42) du rouleau (40) et avec la ligne de jonction (78) s'étendant du centre (70) de l'autre disque de guidage (12) au centre (42) du rouleau (40).

7. Dispositif suivant la revendication 1 ou l'une quelconque des revendications suivantes caractérisé en ce que l'un des disques de guidage (38) est disposé pour être coulissable verticalement ou à peu près verticalement et le disque de support (18) est disposé pour être coulissable en parallèle à la direction de la pression de l'outil d'usinage (52).

8. Dispositif suivant la revendication 1 ou l'une quelconque des revendications suivantes caractérisé en ce que d'abord l'un des disques de guidage (38) peut être retracté du rouleau (40) verticalement ou presque verticalement à la direction de coulissement de l'outil d'usinage (52) et après cela le disque de support (18) peut être retracté au sens inverse à la direction de la pression de l'outil d'usinage (52).

9. Dispositif suivant la revendication 1 ou l'une quelconque des revendications suivantes caractérisé en ce qu'une goulotte d'amenage (80) pour les rouleaux (82, 84, 86, 88) est disposée en parallèle aux plaines des disques de guidage (12, 38) et du disque de support (18), que la goulotte d'amenage (80) est prévue d'un aboutissement (90) au moyen duquel il est assuré que le premier rouleau (82) dans la goulotte d'amenage (80) est placé au niveau de la position (B) pour recevoir et délivrer des pièces qui est formée en ce que le disque de support (18) et les disques de guidage (12, 38) sont retractés de la position d'usinage (A) pour le rouleau respectif (40), et que le premier rouleau (82) peut être mû dans la position (B) pour recevoir et délivrer des pièces par l'intermédiaire d'un piston (92) coulissable en parallèle aux axes du disque de support (18) et des disques de guidage (12, 38).

10. Dispositif suivant la revendication 9 caractérisé en ce qu'une goulotte d'évacuation (96) avec son extrémité (98) au niveau de la position (B) pour recevoir et délivrer les pièces en usinage est aussi disposée à côté du disque de support (18) ou des disques de guidage (12, 38) qui est opposée à la goulotte d'amenage (80).

# FIG. 1

FIG. 2

FIG. 3